# EUROPEAN PATENT APPLICATION

(11) **EP 2 644 029 A2**
(43) Date of publication of application: **02.10.2013**
(21) Application number: 13001632.2
(22) Date of filing: 28.03.2013
(51) Int. Cl.: A01L 7/10

(54) **Horse shoe nail and method wherein such horse shoe nail is applied**

(30) Priority: 28.03.2012 NL 1039500
(71) Applicant: Kerckhaert, besloten vennootschap, 4581 AE Vogelwaarde (NL)
(72) Inventor: Kerckhaert, Rudolf Karel Marie, 9190 Sint-Niklaas (BE)
(74) Representative: Donné, Eddy

(57) **Abstract**

Horseshoe nail (1) for fastening a horseshoe (8), provided with an elongated body or 'shank' (3), with a head (2) at one end and a point (4) with a 'bevel' (5) at the other end, characterised in that the horseshoe nail (1) is at least partially provided with a lubricant (7).

## Description

The present invention relates to a horseshoe nail and a method in which such a horseshoe nail is applied.

More specifically, the invention is intended for a horseshoe nail for fastening a horseshoe against a hoof, and even more specifically for fastening a horseshoe that is provided with a nail guide.

The invention also relates to a method in which such a horseshoe nail is applied.

Conventionally a hoofed animal, generally a horse or a donkey, is shod with horse shoes that are fastened to the hoof by means of nails.

This 'shoeing' is primarily but not exclusively done to prevent too much wear of the hoof or to correct the stance and/or gaits of the animal.

Broadly speaking this is generally done as follows.

Every six to eight weeks the hooves of a horse generally have to be trimmed, after which the shoes have to be repositioned or renewed if need be.

First all foreign materials, such as manure, sand, straw, etc., are removed from the hooves.

Then the toe is first cut to length by trimming or cutting the hoof, and then the rest of the hoof is adjusted to the desired position.

Although the aim is always for straight foot and leg axes, the best position of the hoof and leg nevertheless has to be assessed for each horse individually.

This assessment is generally done both at rest and when moving, whereby in this last case special attention is paid to the way the foot comes away from the ground and the way it is set down.

With a good flat and balanced foot, the heels of the hoof come to the ground simultaneously and the foot rolls in the middle over the toe.

After trimming, a suitable horseshoe is selected that is then made to fit even better, and can be affixed either hot or cold.

It is generally affixed by nailing it to the hoof.

Generally the use of six horseshoe nails is sufficient for this.

These horseshoe nails are affixed to the front half of the hoof in order to obstruct the hoof mechanism as little as possible.

This means that a certain expansion of the hoof must be able to take place upon every step or loading and a certain spring-back when successively unloaded, whereby a type of bellows effect occurs that guarantees sufficient blood flow through the living parts of the foot.

Fastening a horseshoe properly with horseshoe nails requires skill and must be done professionally, whereby a certain play has to be left for the lengthways and breadthways expansion towards the back of the foot, in the heel, to enable the action of the hoof mechanism.

In the base of each horseshoe there is a slot, called the groove, in which the nail holes are placed.

The groove and the nail holes of a conventional horseshoe have to be placed such that after adjustment, they are exactly opposite the white line that can be seen on the underside of a normal hoof, and indicates the dividing line between the hoof wall on the outside and the living tissue on the inside of the foot.

When driving in the horseshoe nail, it has to penetrate into the white line via the sole surface, and then go obliquely upwards through the hoof wall and come out on the surface of the hoof wall at around 1/3 of the height of this wall measured from the bottom.

This is only possible when every hoof nail is driven in separately at an angle to the sole surface that is adapted to the local angle of the hoof wall itself.

In order to enable this driving in at the desired angle, which differs from place to place on the hoof, with conventional preformed horseshoes a series of nail holes have to be provided that allow a relatively large play with respect to the horseshoe nails used.

Conventionally these nail holes are not a completely rectangular shape but consist of two parts in line with one another and tapering towards one another.

A first part is a funnel-shaped part that is bordered by the walls of the groove, and which has its widest opening oriented towards the underside of the horseshoe, and in which the head of the horseshoe nail will rest and be wedged in place after being driven in.

Extending from this, and perpendicular to the support surface of the horseshoe, a narrower part with a square or rectangular cross-section, through which the point with the bevel of the horseshoe nail followed by the slender part or the shank can be guided during shoeing, before penetrating the white line in the horny layer of the hoof.

The bevel is generally constructed as a chamfer or slanting side on one side of the point of the horseshoe nail, such that this point presents a certain asymmetry with respect to the centre line of the horseshoe nail.

The bevel is intended to direct the horseshoe nail during nailing, whereby more specifically the asymmetry of the point of the horseshoe nail is intended to guide the horseshoe nail towards the outside of the hoof wall while being driven into the hoof.

With suitable conventional horseshoes, the tops of these horseshoe nail holes, i.e. where the nail comes out of the horseshoe and penetrates into the hoof during shoeing, are exactly opposite the white line of the hoof, which, as mentioned, in fact indicates the dividing line between the hoof wall of the hoof and the softer living tissues.

It is part of professional practices and rules of good craftsmanship that, when being driven in, the horseshoe nails are allowed to bend so that they come out of the horny layer sideways at the desired place on the outside of the hoof.

Finally after driving in the horseshoe nails, the parts of the nails protruding out of the hoof are bent downwards or snipped off if need be, and the bent part is sunk into a small groove that was first made in the hoof wall for that purpose by means of a small gouge.

A great disadvantage of all this is that the correct shoeing of hoofed animals, in addition to the correct and suitable materials and means, always requires a very high level of professional knowledge and skill, all the more so as it can only be done exceptionally under very favourable conditions.

A further disadvantage of this is that the driving in and securing of every nail is accompanied by a certain damage to the hoof, and that this has to be repeated periodically with every change of horseshoe.

A further disadvantage is that the bending of the nails towards the outside while being driven in is sometimes difficult to control, for example due to the large play that has to be left between the nail and nail hole, such that the place where the nails come through the wall is subject to considerable variation.

This position is important for the quality of the hoof and also affects the risk of complications, such as the occurrence of lameness when it comes out too high, or the splitting of the hoof wall if the distance is too small.

A further disadvantage is that, when driving in the first nails, the horseshoe can move slightly, for example due to an unexpected movement of the animal, and that, when this results in the shoe not being well centred, not only can it bring about an abnormal roll in the movement, but it can also lead to the occurrence of hoof tearing, ossification of the hoof cartilage, and can even give rise to fractures.

As mentioned it is already known to give the point of the nail a slanting side, that is called the bevel.

The slanting side or bevel must be turned towards the hoof when driving in the nail, such that the nail is driven through the hoof wall to the outside.

The slanting side as it were steers the nail in the desired direction.

Notwithstanding this, there is always a great demand for horseshoe nails that can be driven in with less force and less lasting damage or deformation, but with greater precision and accuracy and just as securely, more specifically at the right angle, which differs sharply from place to place.

The purpose of the present invention is to provide a solution to at least one of the aforementioned and other disadvantages by providing a horseshoe nail that is provided with an elongated body or 'shank' with a head at one end and a point with a 'bevel' at the other end, and whereby this horseshoe nail is at least partially provided with a lubricant.

The invention also provides a method for fastening a horseshoe to a hoof by means of horseshoe nails that comprises the steps of providing a horseshoe and horseshoe nails whereby these last-mentioned are at least partially provided with a lubricant;
and then fastening the horseshoe according to professional practices by means of the said horseshoe nails.

An advantage is that the horseshoe nail can be driven in with less force and with less resulting damage of the internal structures.

Another advantage is that due to the reduced friction while driving in, the driving angle and bending towards the outside can be better controlled.

In a preferred embodiment at least the bevel is provided with a lubricant.

An advantage of this embodiment is that sufficient lubricant is provided in all respects to obtain a smooth entry of the horseshoe nail into the hoof.

According to another preferred embodiment of a horseshoe nail according to the invention, an aforementioned lubricant is only provided on the bevel side of the horseshoe nail.

This embodiment provides the advantage that the guiding effect, which is normally already obtained by constructing the horseshoe nail with a bevel, is further reinforced with a horseshoe nail according to this embodiment by the lubricant that is applied on the side of the bevel.

According to another embodiment of a horseshoe nail according to the invention, lubricant is only provided in the vicinity of the point of the horseshoe nail.

An advantage of this embodiment of a horseshoe nail according to the invention is that in particular the entry of the horseshoe nail into the hoof is fostered by the lubricant, after which upon the further driving of the horseshoe nail into the hoof, a firm grip of the horseshoe nail in the hoof is assured.

According to another embodiment on the other hand lubricant is applied over a substantial part of the total length of the entire horseshoe nail, for example over more than one third of the total length of the horseshoe nail starting from the vicinity of the point of the horseshoe nail or at the point itself.

Preferably in the aforementioned embodiment of a horseshoe nail according to the invention, however, lubricant is only applied up to a maximum of three quarters of the total length of the horseshoe nail, again over the part starting in the vicinity of the point of the horseshoe nail or at the point itself.

An advantage of this embodiment of a horseshoe nail according to the invention, whereby a substantial part of the total length of the horseshoe nail is provided with lubricant, is of course that the friction while driving in the horseshoe nail is greatly reduced, and this in a practically constant way until the horseshoe nail is completely driven in.

Another interesting aspect of the invention consists of providing the horseshoe nail with lubricant in one of the ways described above, but while not providing any lubricant over a very small zone at the point of the horseshoe nail, for example up to 0.5 mm to 1 mm from the point.

An advantage of one of these embodiments of a horseshoe nail according to invention is that by omitting the lubricant at the point, droplet formation is prevented at the point.

Preferably the lubricant is chosen from the group of natural waxes, such as for example beeswax, carnauba wax, candelilla wax, wool grease, synthetic spermaceti or derivatives or mixtures thereof.

In another preferred embodiment the lubricant is chosen from the group of mineral waxes, such as for example vaseline, paraffin, ozokerite, montan wax, ceresin, kerogen or derivatives or mixtures thereof.

In a further preferred embodiment the lubricant comprises silicones.

In a further preferred embodiment the lubricant comprises one or more higher organic acids, such as for example stearic acid, elaidic acid, derivatives or mixtures thereof.

In a further preferred embodiment the lubricant comprises metal salts of one or more fatty acids, such as for example magnesium stearate.

In a further preferred embodiment the lubricant comprises tallow, beef dripping or lard.

In an alternative preferred embodiment the lubricant comprises esters of organic acids, for example cetyl palmitate.

In a further preferred embodiment the lubricant comprises polyvinylidene fluoride, polytetrafluoroethylene, low molecular polyolefins, polyols, derivatives or mixtures thereof.

In another preferred embodiment the lubricant comprises graphite, talc, or solid round balls.

In a further preferred embodiment the lubricant consists of a solid coating.

In another preferred embodiment of a horseshoe nail according to the invention the lubricant consists of a synthetic wax.

The application of such a lubricant in the form of a synthetic wax to the horseshoe nail preferably results in a dry lubricating film on the horseshoe nail that can be held without problems by the fingers, without fouling or being removed from the horseshoe nail.

A synthetic wax that can be considered is for example a synthetic wax that is typically intended to lubricate and coat a screw thread of a bolt or screw.

Of course such a synthetic wax that acts as a lubricant for the horseshoe nail preferably consists of non-toxic products.

Another preferred characteristic that is best taken into account according to the invention in the composition of the lubricant based on a synthetic wax, is that such synthetic wax is best water-soluble.

In this way the synthetic wax does not form an aggressive medium and can easily be mixed with other aqueous solutions, for example provided with a water-soluble disinfectant, as will be explained hereinafter.

Other typical characteristics of the suitable synthetic waxes for forming a lubricant on a horseshoe nail are their low coefficient of friction, for example 0.09 and 0.15 and a melting point of around 120°C.

Preferably the synthetic waxes used for this purpose are reasonably UV resistant and preserve their physical characteristics for a long time during storage of the horseshoe nail in normal conditions of temperature and humidity, for example typically for 4 years.

A preferred lubricant comprises a micronised synthetic PTFE wax, for example CRAYVALLAC Ⓡ WF-1000 powder of ARKEMA, that is suitable for use in water-based or solvent-based inks or coatings.

In addition to a high lubricating efficiency, it gives the ink or coating a high wear and scratch resistance and is resistant to high temperatures.

Another example of such a synthetic wax that can be used as a lubricant for a horseshoe nail is better known by the brand name of "precote" and is of the "Nytorq Ⓡ" type for example.

An alternative of such a synthetic wax that is certainly not toxic that may also be used as a lubricant is better known by the brand name of "precote" and is of the "Top 150" type.

According to another preferred characteristic the lubricant is constructed as a smooth paint, lacquer or varnish, preferably oil-based or a paint or varnish that contains silicones.

An example of a suitable paint is the primer Corlar Ⓡ 825S™ of DuPont™.

This paint is a two component zinc chromate and chromium-containing epoxy primer that leaves behind a fine dry film on the horseshoe nail. It is a rust-resistant primer with excellent durability that also has the advantage of providing high protection against corrosion of the horseshoe nail. This primer is also highly resistant to chemical influences and moisture as well as weather conditions.

This paint can be applied by spraying or other conventional two-component painting techniques.

Another suitable example of a paint is the one known by the name of SESTRIDUR HB of the producer Sestriere Vernice, and this paint can form a two-component acrylate topcoat that is polymerisable into an aliphatic isocyanate. This paint applied to a horseshoe nail gives the horseshoe nail high resistance against weather effects, wear, water, chemical influences and can also be applied by spraying or similar at low temperatures down to -5°C.

According to another preferred embodiment of a horseshoe nail according to the invention, the horseshoe nail is provided with a lubricant that contains a disinfectant.

Preferably the disinfectant belongs to the class of iodophors.

According to the invention the disinfectant for the lubricant on the horseshoe nail in liquid form is preferably an aqueous solution.

As a less preferred alternative a disinfectant in an alcohol solution can also be applied.

A suitable example that can be used as a disinfectant for a horseshoe nail is a product better known by the brand name of ISO-Betadine Ⓡ.

Preferably according to the invention an ISO-Betadine Ⓡ Dermicum is used as the disinfectant in the lubricant.

Such a disinfectant in an aqueous solution can easily be mixed with a water-soluble lubricant, such as for example an above-mentioned synthetic wax of the water-soluble type, which is preferable according to the invention.

As a less preferred alternative, however, the disinfectant can also be provided as an additional layer on top of the lubricant.

A great advantage of the application of a disinfectant in the lubricant is that an infection can occur less easily if, while driving in the horseshoe nail, the horseshoe nail accidentally strikes the living tissues of the hoof.

Another characteristic of a horseshoe nail according to the invention is that a lubricant can be applied with a specific colour, whereby no colour is ruled out.

Preferably, however, according to the invention it is chosen to provide a horseshoe nail according to the invention with a white lubricant.

This white collar of the lubricant provides the advantage that, when driving in such a horseshoe nail, if a mistake is made and the living tissues of the hoof are accidentally struck, resulting in bleeding, such a mistake can easily be detected by examining the exiting part of the horseshoe nail while shoeing the horse for any blood traces present on the white coating.

The white of the lubricant hereby contrasts well with the colour of any blood traces.

Another aspect why a white colour is chosen for the lubricant is that the horseshoe nail is intended to be fastened in the 'white line' of the hoof.

Moreover, the white colour also creates a more sterile impression than other colours, which is particularly applicable when applying a lubricant that contains a disinfectant, as described above.

With the intention of better showing the characteristics of the invention, a preferred embodiment of a horseshoe nail according to the invention is described hereinafter by way of an example, without any limiting nature, with reference to the accompanying drawings, wherein:
figure 1 schematically shows a side view of a horseshoe nail according to the invention;
figures 2 to 6, analogous to figure 1, show alternative embodiments of a horseshoe nail according to the invention;
figure 7 shows a conventional horseshoe in which horseshoe nails are applied;
figure 8 shows a cross-section of horse's foot shod according to the invention.

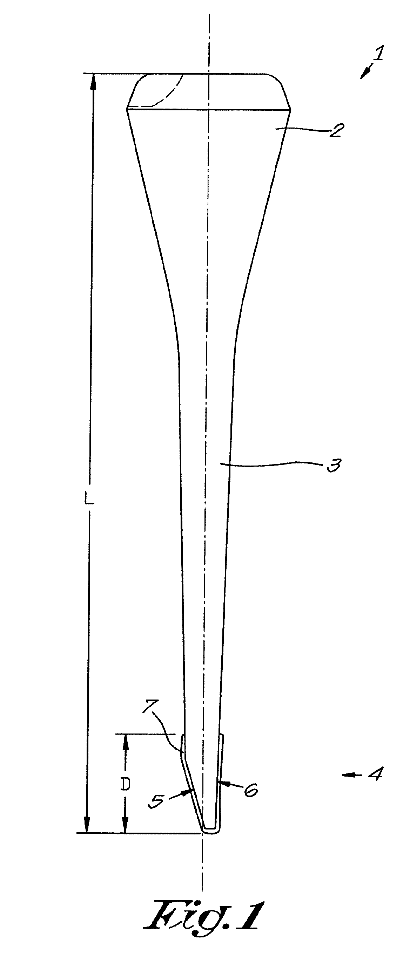

Figure 1 schematically shows a side view of a horseshoe nail 1 according to the invention comprising a wide head 2, a slender body or shank 3, and a point 4.

The cross-section of the nail 1, not shown, is essentially quadrangular, mostly flat rectangular.

In order to make the horseshoe nail 1 bend outwards and come out of the hoof wall when being driven in, the point 4 is provided with a slanting side 5 and a straight side 6.

The slanting side 5 is called the bevel 5.

When being driven in this slanting side 5 or bevel 5 is turned towards the hoof.

The horseshoe nail 1 according to the invention is hereby provided with a lubricant 7 according to the invention, shown here as a solid coating.

In the embodiment of a horseshoe nail 1 according to the invention shown in figure 1, lubricant 7 is only provided in the vicinity of the point 4 of the horseshoe nail 1.

In this embodiment, moreover, at least the bevel 5 is provided with lubricant 7 but also the straight side 6 of the point 4 of the horseshoe nail 1.

In this way the horseshoe nail 1 can readily enter into a hoof.

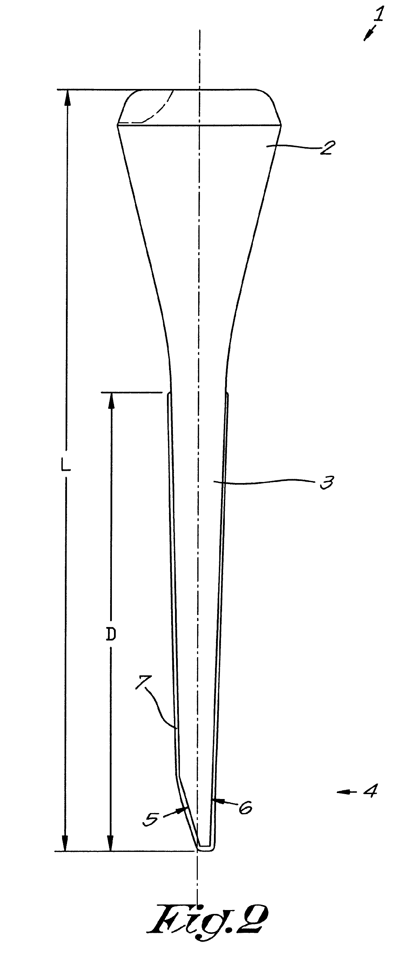

Figure 2 shows a different embodiment of a horseshoe nail 1 according to the invention, whereby lubricant 7 is applied over a substantial section D of the total length L of the horseshoe nail 1.

In this embodiment, lubricant is provided over more than one third of the total length L of the horseshoe nail 1, starting from the point 4 of the horseshoe nail 1.

Moreover, in this embodiment less than three quarters of the total length L of the horseshoe nail 1 is provided with lubricant 7, again over the section D starting from the point 4 of the horseshoe nail 1.

Of course the quantity of lubricant 7 applied is best adapted to the application, and thus other embodiments with lubricant 7 applied over a greater or lesser part of the horseshoe nail 1 than shown in figures 1 and 2 are not excluded from the invention.

In particular the possibilities include providing the horseshoe nail with lubricant 7 over its full length L. In this case the horseshoe nail can be immersed in a bath of lubricant, which is easier and cheaper than the local application of the lubricant to certain places.

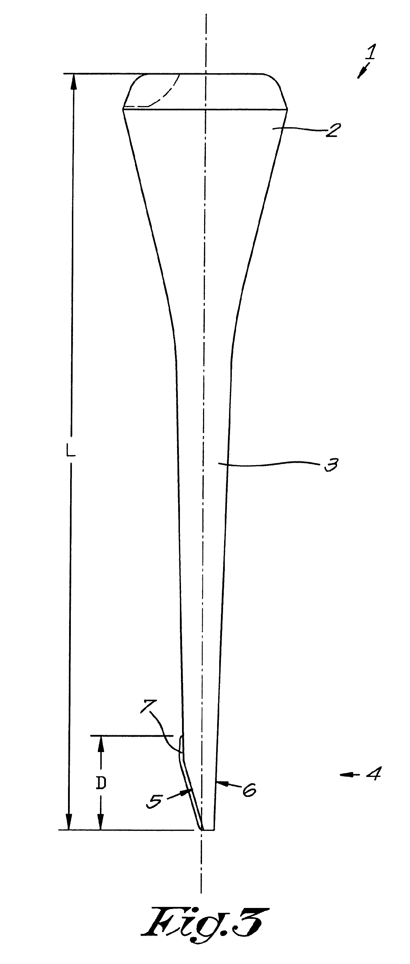

Analogous to figure 1, figure 3 shows an embodiment of a horseshoe nail according to the invention, whereby lubricant 7 is applied at the level of the point 4, and whereby more specifically an aforementioned lubricant 7 is only provided at the side of the bevel 5 of the horseshoe nail 1.

This embodiment provides the advantage that the guiding of the horseshoe nail 1 outwards while driving in is fostered by the lubricant 7 on the bevel 5, compared to the case where no lubricant 7 is applied, or as in figure 1 on both the side of the bevel 5 and the straight side 6 of the horseshoe nail 1.

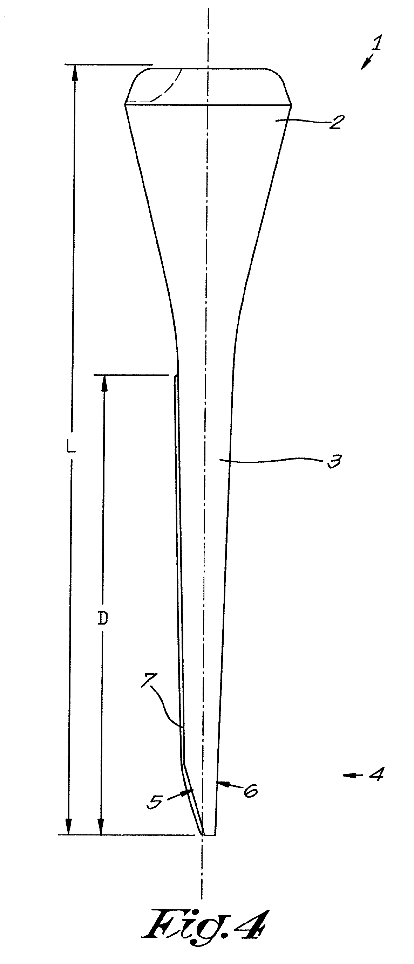

Figure 4 shows an embodiment of a horseshoe nail 1 according to the invention analogous to that of figure 3, in the sense that lubricant 7 is only applied to the side of the horseshoe nail 1 with bevel 5, but over a substantially larger part D, similar to the case in the embodiment of figure 2.

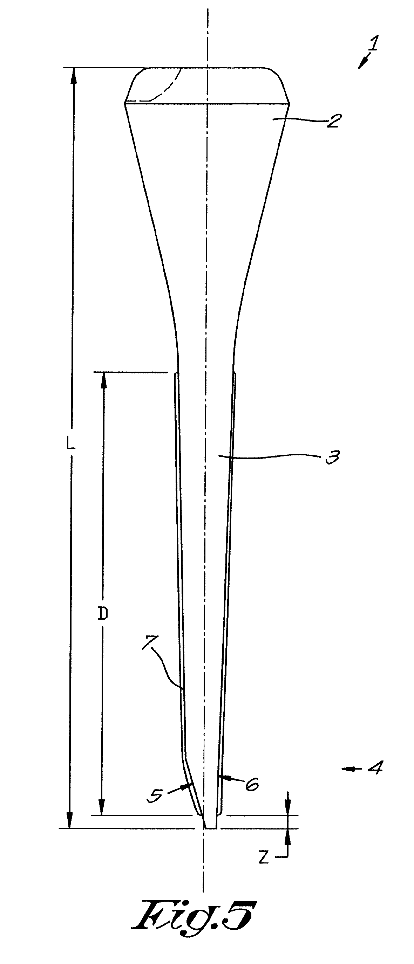

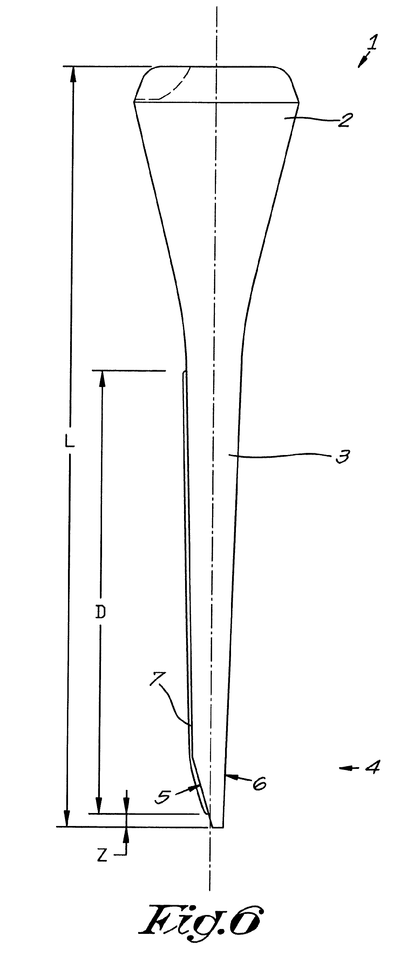

Figures 5 and 6 show other possible embodiments of a horseshoe nail 1 according to the invention, whereby a small possible improvement is made with respect to the cases respectively shown in figures 2 and 4.

This small possible improvement consists of not providing any lubricant over a very small zone Z at the point 4 of the horseshoe nail 1, so that the formation of a droplet of lubricant 7 at the point 4 of the horseshoe nail 1 can be prevented.

Typically this zone Z will extend up to 0.5 mm to 1 mm from the point 4 of the horseshoe nail 1.

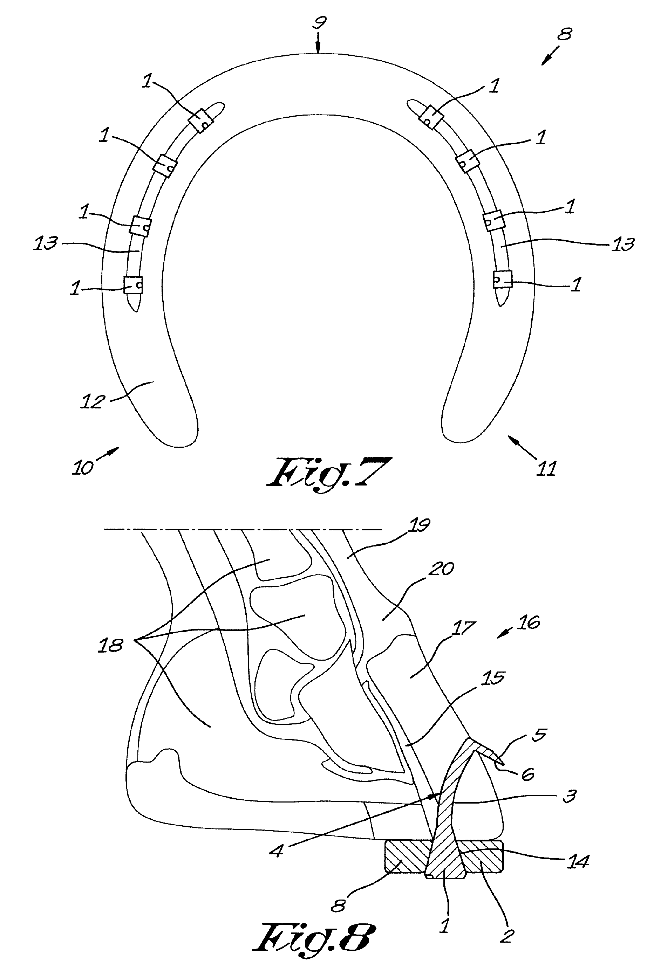

Figure 7 schematically shows a bottom perspective view of a horseshoe 8 in which horseshoe nails 1 are affixed.

This horseshoe consists of a toe section 9 and two branches 10 and 11.

The shape is such that it must follow the outside edge of the hoof, whereby the size of the horseshoes 1 corresponds to the size of the hooves.

As these are different for the front and back legs, and different between the left and right, and also different from animal to animal, the horseshoes 1 always have to be made or adapted to measure.

In the bottom plane 12 there is a slot, the 'groove' 13, in which the nail holes 14 are located.

The slot 13 and the nail holes 14 are affixed such that they are positioned precisely opposite the white line or zone 15 on the sole of the hoof, as illustrated on the basis of figure 8.

A good groove 13 ensures good clamping of the heads 2 of the horseshoe nail 1.

The groove 13 forms a V-shaped groove.

Figure 8 schematically shows a longitudinal cross-section of a horse's hoof 16 fitted with horseshoe nails 1 according to the invention.

In this we identify the horseshoe 8, skilfully fastened with horseshoe nails 1 according to the invention, whereby the horseshoe nail 1 is first driven into the white zone 15 of the horse's hoof 16, then pierces through the hoof wall 17 and thereby again comes to the outside, after which the point 4 of the horseshoe nail 1 is bent downwards.

The cross-section through the horse's hoof 16 schematically shows the inside of the foot in which we identify the various bones 18, the epidermis 19, coronary band 20 and the hoof wall 17.

Shoeing with a horseshoe nail 1 according to the invention is done conventionally, as described earlier.

A problem that can arise with horseshoe nails during use is that they can rust or corrode in the course of time, such that that the strength of the nail and the strength of the nail fastening can weaken.

According to a preferred variant of a horseshoe nail 1 according to the invention is that, prior to the application of the lubricant to the horseshoe nail 1, the horseshoe nail 1 is first provided with an anti-rust coating, at least on a section of the horseshoe nail 1.

A coating is chosen as an anti-rust coating based on zinc and/or copper.

A horseshoe nail 1 according to this variant is then externally zinc-coated or copper-coated over all or part of its surface, and a lubricant 7 is provided on the zinc-coated or copper-coated horseshoe nail 1, for example in the form of a coloured or otherwise layer of lubricant 7 over all or part of the length L of the horseshoe nail 1, or locally applied.

A copper coating provides the additional advantage that bacteria and fungal spores that can penetrate through the nail holes in the hoof wall have no opportunity to survive or proliferate as such organisms die in contact with copper. A copper coated horseshoe nail thus contributes to healthier and stronger hooves and thus to optimum performance of the hoofed animal, for example in horse racing.

The present invention is by no means limited to the embodiments described as an example and shown in the drawings, but a horseshoe nail 1 and method according to the invention can be realised in all kinds of variants and in different ways, without departing from the scope of the invention.

## Claims

1. Horseshoe nail (1) for fastening a horseshoe (8), provided with an elongated body or 'shank' (3), with a head (2) at one end and a point (4) with a 'bevel' (5) at the other end, **characterised in that** the horseshoe nail (1) is at least partially provided with a lubricant (7).

2. Horseshoe nail (1) according to claim 1, **characterised in that** the lubricant (7) is at least applied to the bevel (5) and only in the vicinity of the point (4) of the horseshoe nail (1).

3. Horseshoe nail (1) according to claim 1, **characterised in that** only the side of the horseshoe nail (1) with bevel (5) is provided with an aforementioned lubricant (7).

4. Horseshoe nail (1) according to one or more of the previous claims, **characterised in that** lubricant (7) is applied over more than one third of the total length (L) of the horseshoe nail (1) and up to a maximum of three quarters of the total length (L) of the horseshoe nail (1), over the part (D) starting from the vicinity of the point (4) of the horseshoe nail (1).

5. Horseshoe nail (1) according to one or more of the previous claims, **characterised in that** the lubricant (7) comprises a wax chosen from the group van natural waxes, including beeswax, carnauba wax, candelilla wax, wool grease, spermaceti, derivatives or mixtures thereof, or comprises a wax chosen from the group van mineral waxes, including vaseline, paraffin, ozokerite, montan wax, ceresin, kerogen or derivatives or mixtures thereof or a synthetic wax.

6. Horseshoe nail (1) according to claim 1, **characterised in that** a smooth paint or varnish is applied as a lubricant (7), preferably an oil-based paint.

7. Horseshoe nail (1) according to claim 1, **characterised in that** a paint or varnish is applied as a lubricant in the form of an epoxy primer, such as for example the primer Corlar Ⓡ 825S™ of DuPont™.

8. Horseshoe nail (1) according to claim 1, **characterised in that** a paint or varnish is applied as a lubricant in the form of a paint that forms an acrylate coating, such as for example SESTRIDUR HB of the manufacturer Sestriere Vernice.

9. Horseshoe nail (1) according to claim 1, **characterised in that** the lubricant (7) comprises silicones.

10. Horseshoe nail (1) according to claim 1, **characterised in that** the lubricant (7) comprises one or more organic acids, including stearic acid, elaidic acid or derivatives or mixtures of organic acids or esters of organic acids or metal salts of one or more fatty acids, such as magnesium stearate.

11. Horseshoe nail (1) according to claim 1, **characterised in that** the lubricant (7) comprises tallow, beef dripping or lard and/or graphite, talc, or solid round balls.

12. Horseshoe nail (1) according to claim 1, **characterised in that** the lubricant (7) is a synthetic wax which, before application to the horseshoe nail, forms a liquid aqueous solution which, after application to the horseshoe nail, forms a dry non-wipeable solid coating.

13. Horseshoe nail (1) according to claim 1, **characterised in that** the lubricant (7) comprises a micronised synthetic PTFE wax, for example in the form of CRAYVALLAC Ⓡ WF-1000 of ARKEMA.

14. Horseshoe nail (1) according any one of the previous claims, **characterised in that** the lubricant contains a disinfectant that belongs to the class of iodophors or that is an ISO-Betadine Ⓡ or an ISO-Betadine Ⓡ dermicum.

15. Horseshoe nail (1) according any one of the previous claims, **characterised in that** the horseshoe nail (1), prior to the application of the lubricant (7), is provided with an anti-rust coating based on zinc and/or copper over at least a part of its surface.

16. Method for fastening a horseshoe (8) to a hoof by means of horseshoe nails (1) **characterised in that** it comprises the following steps:
the provision of a horseshoe (8) and horseshoe nails (1) whereby these last-mentioned are at least partially provided with a lubricant (7);
then fastening the horseshoe (8) by means of the said horseshoe nails (1).
